# EUROPÄISCHE PATENTSCHRIFT

(11) **EP 0 417 508 B1**
(45) Veröffentlichungstag und Bekanntmachung des Hinweises auf die Patenterteilung: **20.10.1993**
(21) Anmeldenummer: 90116026.7
(22) Anmeldetag: 22.08.1990
(51) Int. Cl.: B23Q 5/14

(54) **Spielfreier Spindelantrieb**
Clearance free spindel drive
Motorisation de broche sans jeu

(30) Priorität: 11.09.1989 DE 3930334
(43) Veröffentlichungstag der Anmeldung: 20.03.1991
(73) Patentinhaber: INDEX-WERKE GMBH & CO. KG HAHN & TESSKY, D-73726 Esslingen (DE)
(72) Erfinder: Hafla, Dietmar Franz, D-7066 Hohengehren (DE)
(74) Vertreter: Hoeger, Stellrecht & Partner

(56) Entgegenhaltungen:
- DE-A- 2 855 579
- DE-C- 3 438 309
- US-A- 3 124 998
- US-A- 4 643 037

## Beschreibung

Die Erfindung betrifft einen Spindelantrieb für Werkzeugmaschinen, insbesondere für Drehmaschinen, umfassend ein Gehäuse, eine in dem Gehäuse gelagerte Spindel, einen an dem Gehäuse angeordneten Antriebsmotor und ein in dem Gehäuse angeordnetes Getriebe mit einer vom Antriebsmotor getriebenen und über zwei im Abstand voneinander angeordneten Wellenlagern im Gehäuse gelagerten Zwischenwelle sowie mit einem auf der Zwischenwelle sitzenden ersten Getriebezahnrad, welches zum Antrieb der Spindel als C-Achse in einer ersten Stellung mit einem die Spindel antreibenden zweiten Getriebezahnrad kämmend und spielfrei in Eingriff ist.

Ein derartiger Spindelantrieb ist aus der DE-C- 34 38 309 bekannt. Bei diesem Spindelantrieb wird zum spielfreien Antrieb der Spindel ein Zwischenzahnrad zwischen ein abtriebsseitiges Zahnrad und ein antriebsseitiges Zahnrad eingefahren und mit diesen beiden Zahnrädern so in Eingriff gehalten, daß ein spielfreier Antrieb des abtriebsseitigen Zahnrades erfolgt. Bei einem nicht C-achsgesteuerten Drehantrieb wird mit zusätzlichen Getriebestufen gearbeitet und das Zwischenzahnrad mit den beiden anderen Zahnrädern vollständig außer Eingriff gebracht.

Der Nachteil dieser Lösung ist darin zu sehen, daß zu den für den normalen Drehantrieb vorhandenen Getriebestufen noch eine zusätzliche spielfreie Getriebestufe zuschaltbar angeordnet sein muß.

Der Erfindung liegt daher die Aufgabe zugrunde, einen Spindelantrieb der gattungsgemäßen Art derart zu verbessern, daß dieser konstruktiv einfacher ist.

Diese Aufgabe wird bei einem Spindelantrieb der eingangs beschriebenen Art erfindungsgemäß dadurch gelöst, daß das erste Wellenlager die Zwischenwelle in Richtung quer zu deren Achse unbeweglich am Gehäuse fixiert und daß die Zwischenwelle durch das zweite Wellenlager relativ zu dem zweiten Getriebezahnrad in einer Stellrichtung zwischen der ersten und einer zweiten Stellung hin und her bewegbar ist, wobei in der zweiten Stellung die Getriebezahnräder spielbehaftet miteinander kämmen.

Der Vorteil der erfindungsgemäßen Lösung ist darin zu sehen, daß ein und dieselbe Getriebestufe zum C-Achsantrieb und zum normalen Drehbetrieb verwendet werden kann, da ein und dieselbe Getriebestufe von einem spielfreien Zustand in einen spielbehafteten Zustand schaltbar ist, wobei dies erfindungsgemäß konstruktiv einfach dadurch gelöst ist, daß die Zwischenwelle durch das zweite Lager relativ zu der Spindel und somit auch relativ zu dem Gehäuse in einer Stellrichtung zwischen der ersten und der zweiten Stellung hin und her bewegbar ist, um die von dem ersten Getriebezahnrad und dem zweiten Getriebezahnrad gebildete Getriebestufe einmal in einen spielfreien und einmal in einen spielbehafteten Zustand zu schalten.

Besonders vorteilhaft ist es hierbei, wenn das zweite Wellenlager ein die Zwischenwelle aufnehmendes Drehlager und ein das Drehlager in Stellrichtung bewegendes Stellglied faßt. Dadurch besteht die Möglichkeit, die Bewegung der Zwischenwelle in Stellrichtung nicht im drehenden System, sondern im ruhenden System auszuführen.

Eine besonders platzsparende Lösung ist dadurch möglich, daß das Stellglied das Drehlager umgreift.

Im einfachsten Fall läßt sich die erfindungsgemäße Lösung dadurch realisieren, daß das Stellglied ein Halteelement für das Drehlager aufweist, welches in der Stellrichtung bewegbar ist.

Ferner ist es bei einem Ausführungsbeispiel vorteilhaft, wenn das Stellglied ein in einem Lagerteil drehbares Exzenterelement umfaßt, wobei vorzugsweise eine Betätigung des Exzenterelementes durch einen Hydraulikkolben erfolgt, durch welchen das Exzenterelement verdrehbar ist.

Eine einfache konstruktive Realisierung der Erfindung sieht vor, daß das Halteelement das Exzenterelement bildet, welches somit das Drehlager aufnimmt.

Bei den bislang beschriebenen Ausführungsbeispielen wurde nichts darüber ausgesagt, wie am zweckmäßigsten eine Betätigung des Stellgliedes erfolgt. Vorzugsweise ist dies so gelöst, daß das Stellglied einen Kolbenraum und einen in diesem angeordneten Kolben umfaßt.

Eine konstruktiv besonders einfache Lösung sieht in diesem Zusammenhang vor, daß das Halteelement den druckbeaufschlagbaren Kolben bildet und somit vorzugsweise zwei druckbeaufschlagbare Druckräume im Kolbenraum voneinander trennt.

Hinsichtlich der Stellrichtung wurden im Rahmen der vorliegenden Erfindung bislang keine näheren Angaben gemacht. So sieht ein vorteilhaftes Ausführungsbeispiel vor, daß die Stellrichtung quer zur Achse der Zwischenwelle verläuft. In diesem Fall folgt also eine Verstellung der Zwischenwelle und somit des ersten Getriebezahnrades in Richtung auf die Spindel und somit auf das zweite Getriebezahnrad zu, so daß die beiden Getriebezahnräder mit ihren Zähnen in Eingriff gedrückt werden.

Besonders geringe Verstellwege sind dann notwendig, wenn die Stellrichtung im wesentlichen radial zur Drehachse des zweiten Getriebezahnrades verläuft, so daß das erste und das zweite Getriebezahnrad durch eine (geringe Stellbewegung miteinander stärker in Eingriff kommen.

In all den vorstehend genannten Fällen, bei welchen die Stellrichtung quer zur Achse der Zwischenwelle verläuft, sind das erste und das zweite Getriebezahnrad, sofern diese Stirnräder sind, mit üblichen Verzahnungen versehen, die durch die Bewegung der Zwischenwelle in Stellrichtung lediglich tiefer oder weniger tief miteinander in Eingriff gebracht werden, um spiel frei oder spielbehaftet zu kämmen.

Alternativ dazu ist es aber auch denkbar, daß die Stellrichtung parallel zur Achse der Zwischenwelle verläuft. In diesem Fall ist bei Verwendung von Stirnrädern als erste und zweite Getriebezahnräder vorgesehen, daß zumindest eine der Verzahnungen in Querrichtung keilförmig ausgebildete Zähne aufweist, so daß je nachdem, wie weit das erste und das zweite Getriebezahnrad übereinander geschoben sind, die Zähne entweder spielfrei oder spielbehaftet miteinander kämmen.

Hinsichtlich der Ausbildung der Zwischenwelle wurden bei der Erläuterung der bisher beschriebenen Ausführungsbeispiele keine näheren Angaben gemacht. So ist es in einem Fall vorteilhaft, wenn die Zwischenwelle eine Hohlwelle ist.

Zweckmäßigerweise ist in diesem Fall vorgesehen, daß die Zwischenwelle auf einer Antriebswelle sitzt.

Insbesondere, um noch weitere Übersetzungen beim Antrieb der Spindel zu ermöglichen, ist vorgesehen, daß die Zwischenwelle in Richtung ihrer Achse auf der Antriebswelle zwischen einer ersten und einer zweiten Schaltstellung verschiebbar ist.

Um außerdem auch noch die Zwischenwelle definiert in den Schaltstellungen zu positionieren, ist zweckmäßigerweise vorgesehen, daß die Zwischenwelle in Richtung ihrer Achse unverschieblich auf der Antriebswelle fixierbar, insbesondere anschlagbar ist.

Hinsichtlich des Antriebs der Zwischenwelle über die Antriebswelle sind die unterschiedlichsten Möglichkeiten denkbar. Eine konstruktiv besonders einfache Lösung sieht vor, daß die Zwischenwelle in den Schaltstellungen durch Keilverzahnungen mit der Antriebswelle verbindbar ist, wobei insbesondere die Keilverzahnungen spielfrei in Eingriff bringbar sind, so daß eine spielfreie Drehmomentübertragung von der Antriebswelle auf die Zwischenwelle erfolgt.

Vorzugsweise läßt sich dies konstruktiv am einfachsten dadurch realisieren, daß die Zwischenwelle auf ihren einander gegenüberliegenden Stirnseiten mit Keilverzahnungen versehen ist, welche mit entsprechenden und diesen zugewandten Keilverzahnungen der Antriebswelle in der ersten bzw. der zweiten Schaltstellung in Eingriff bringbar sind und sich vorzugsweise auch durch die Beaufschlagung der Zwischenwelle in Richtung ihrer Achse spielfrei in Eingriff halten lassen.

Vorzugsweise ist die zweite Getriebestufe dadurch realisiert, daß die Zwischenwelle ein drittes Getriebezahnrad trägt, welches mit einem vierten, die Spindel antreibenden Getriebezahnrad alternativ zum ersten und zweiten Getriebezahnrad in Eingriff bringbar ist.

Bei den bislang beschriebenen Ausführungsbeispielen wurde nichts darüber ausgesagt, wie die Zwischenwelle durch das erste und das zweite Wellenlager im Gehäuse gelagert ist, d.h., ob die Zwischenwelle direkt, d.h. selbst, mit dem ersten und zweiten Wellenlager gelagert ist oder indirekt.

Im Fall der Verwendung einer Antriebswelle ist zweckmäßigerweise vorgesehen, daß die Antriebswelle mit dem ersten und dem zweiten Wellenlager im Gehäuse gelagert ist und die Bewegung des zweiten Wellenlagers in Stellrichtung von der Antriebswelle auf die Zwischenwelle übertragen wird.

Eine konstruktiv einfache und vorteilhafte Lösung sieht vor, daß die Antriebswelle das erste und das zweite Wellenlager durchsetzt.

Weitere Merkmale und Vorteile der Erfindung sind Gegenstand der nachfolgenden Beschreibung sowie der zeichnerischen Darstellung einiger Ausführungsbeispiele. In der Zeichnung zeigen:
- Fig. 1: eine schematische perspektivische Ansicht eines erfindungsgemäßen Spindelantriebs;
- Fig. 2: einen Schnitt längs Linie 2-2 in Fig. 1;
- Fig. 3: eine vergrößerte Darstellung einer Zwischenwelle und einer Antriebswelle mit einer Steuerung für einzelne Schaltstellungen der Zwischenwelle;
- Fig. 4: eine Draufsicht auf die Zwischenwelle und die Antriebswelle in Richtung des Pfeils A der Fig. 3;
- Fig. 5: einen Schnitt längs Linie 5-5 in Fig. 3;
- Fig. 6: eine Ansicht ähnlich Fig. 5 einer ersten Variante;
- Fig. 7: eine Ansicht ähnlich Fig. 5 einer zweiten Variante;
- Fig. 8: einen Schnitt ähnlich Fig. 3 durch ein zweites Ausführungsbeispiel und
- Fig. 9: eine Draufsicht ähnlich Fig. 4 auf die Zwischenwelle und die Antriebswelle des zweiten Ausführungsbeispiels.

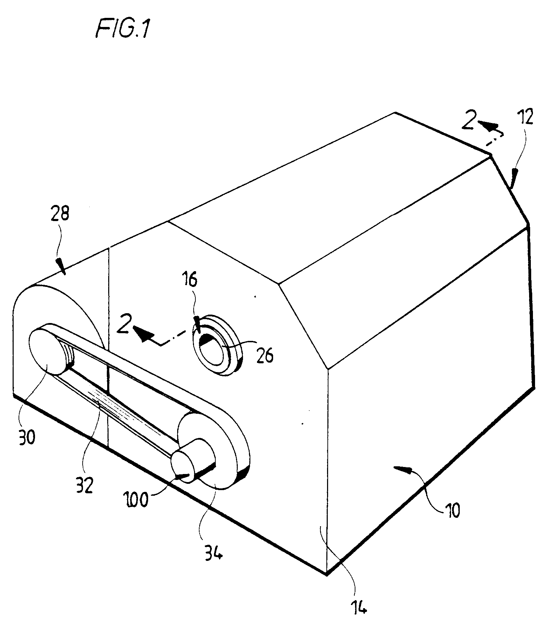

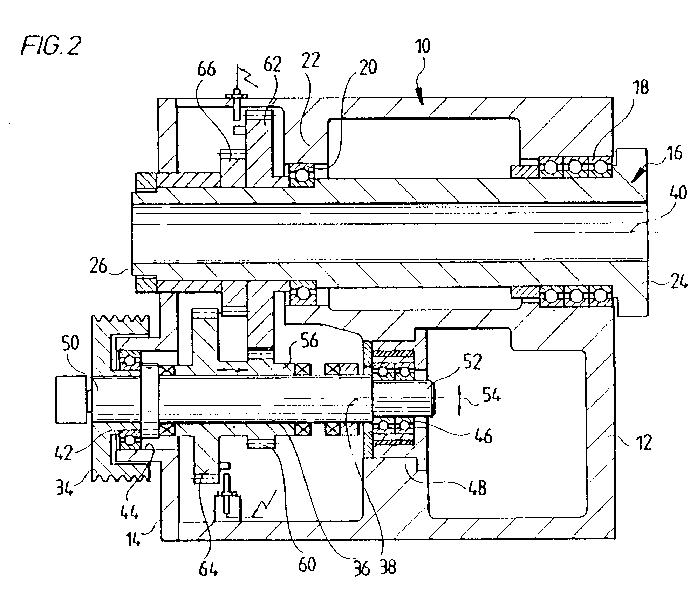

Ein erstes Ausführungsbeispiel eines erfindungsgemäßen Spindelantriebs, schematisch dargestellt in Fig. 1, umfaßt ein als Ganzes mit 10 bezeichnetes Gehäuse, welches, wie in Fig. 2 dargestellt, eine Vorderwand 12 und eine Rückwand 14 aufweist. In diesem Gehäuse 10 ist eine als Ganzes mit 16 bezeichnete Spindel drehbar gelagert, und zwar durch ein von der Vorderwand 12 gehaltenes vorderes Spindellager 18 und ein hinteres Spindellager 20, welches von einem zwischen der Vorderwand 12 und der Rückwand 14 angeordneten Mittelsteg 22 des Gehäuses 10 gehalten ist.

Die Spindel 16 erstreckt sich durch das gesamte Gehäuse 10 und steht mit einem Spindelkopf 24 über die Vorderwand und mit einem Spindelende 26 über die Rückwand 14 über.

Zum Antrieb der Spindel 16 ist an dem Gehäuse 10 ein als Ganzes mit 28 bezeichneter Antriebsmotor angeordnet, welcher über eine Riemenscheibe 30 und einen parallel zur Rückwand 14 sowie hinter dieser verlaufenden Treibriemen 32 eine über die Rückwand 14 überstehende Riemenscheibe 34 antreibt, die fest auf einer Antriebswelle 36 sitzt, die sich mit ihrer Achse 38 parallel zur Spindelachse 40 in dem Gehäuse 10 erstreckt.

Die Antriebswelle 36 ist dabei mittels eines ersten Wellenlagers 42, welches in einer Lagerausnehmung 44 der Rückwand 14 aufgenommen ist, gelagert und durch ein zweites Wellenlager 46, welches in einem zwischen der Rückwand 14 und der Vorderwand 12 liegenden Haltesteg 48 des Gehäuses 10 sitzt.

Die Antriebswelle 36 durchsetzt dabei mit einem hinteren, die Riemenscheibe 34 tragenden Ende 50 das erste Wellenlager 42 und mit einem vorderen Ende 52 das zweite Wellenlager 46.

Das erste Wellenlager 42 ist dabei so ausgebildet, daß es das hintere Ende 50 der Antriebswelle in allen Richtungen quer zu deren Achse 38 fixiert im Gehäuse 10 hält, während das zweite Wellenlager 46 so ausgebildet ist, daß das vordere Ende 52 in einer senkrecht zur Achse 38 verlaufenden und in einer von der Achse 38 und der Spindelachse 40 aufgespannten Ebene liegenden Stellrichtung 54 auf die Spindel 16 zu oder von dieser weg bewegbar ist.

Die Antriebswelle 36 durchsetzt eine als Hohlwelle ausgebildete Zwischenwelle 56, die zwischen dem ersten Wellenlager 42 und dem zweiten Wellenlager 46 angeordnet ist. Die Zwischenwelle 56 ist auf der Antriebswelle 36 in Richtung der Achse 38 zwischen einer ersten Schaltstellung, dargestellt in den Figuren 2, 3 und 4, sowie einer zweiten Schaltstellung verschiebbar, wobei die Zwischenwelle 56 in beiden Schaltstellungen drehfest mit der Antriebswelle 36 verbunden ist.

In der ersten Schaltstellung kämmt ein erstes, drehfest auf der Zwischenwelle 56 sitzendes Getriebezahnrad 60 mit einem zweiten, auf der Spindel 16 zwischen dem hinteren Spindellager 20 und dem Spindelende 26 drehfest sitzenden Getriebezahnrad 62, so daß in der ersten Schaltstellung über den Antriebsmotor 28 die von diesem mittels der Riemenscheiben 30 und 34 sowie den Treibriemen 32 getriebene Antriebswelle 36 und die drehfest mit dieser verbundene Zwischenwelle 56 der Spindel 16 antreibbar sind.

Vorzugsweise sind in der ersten Schaltstellung das erste Getriebezahnrad 60 und das zweite Getriebezahnrad 62 als Untersetzungsgetriebe ausgebildet, so daß die Spindel 16 langsam angetrieben wird.

In der zweiten Schaltstellung ist die Zwischenwelle 56 so weit in Richtung des zweiten Wellenlagers 46 verschoben, daß ein drittes Getriebezahnrad 64, welches im Abstand hinter dem ersten Getriebezahnrad 60 drehfest auf der Zwischenwelle 56 sitzt, mit einem unmittelbar hinter dem zweiten Getriebezahnrad 62 sitzenden vierten Getriebezahnrad 66 in Eingriff bringbar ist und dabei das erste Getriebezahnrad 60 und das zweite Getriebezahnrad 62 außer Eingriff kommen. Vorzugsweise erfolgt beim Antrieb über das dritte Getriebezahnrad 64 und das vierte Getriebezahnrad 66 keine Untersetzung, sondern ungefähr eine 1:1-Übersetzung.

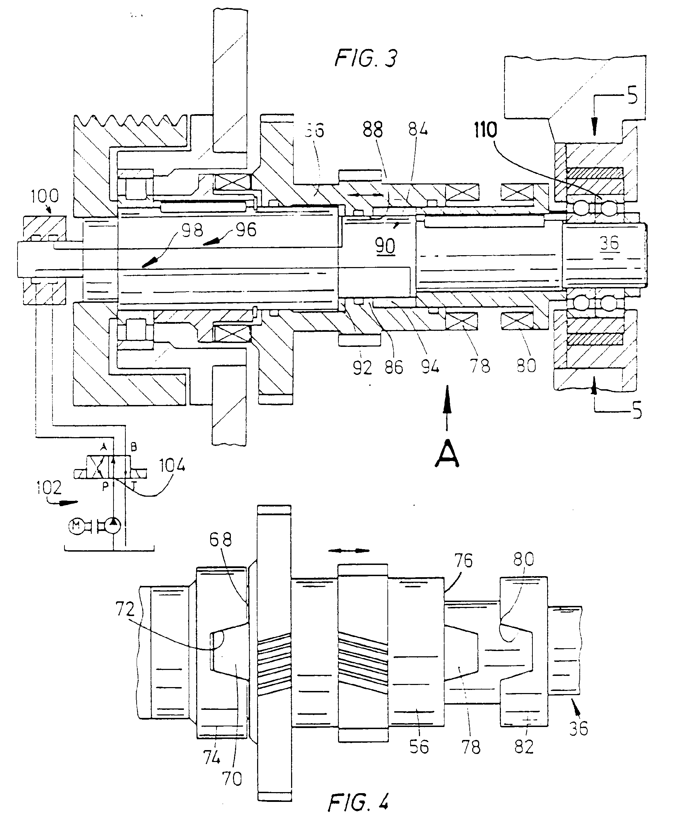

Die drehfeste Verbindung zwischen der Antriebswelle 36 und der Zwischenwelle 56 ist in den Figuren 3 und 4 im einzelnen dargestellt, und wie in diesen ersichtlich ist hierzu die Zwischenwelle 56 an ihrer dem ersten Wellenlager 42 zugewandten Stirnseite 68 mit einem keilförmigen, über diese Stirnseite 68 vorspringenden ersten Nocken 70 versehen, der in der ersten Schaltstellung mit einer entsprechenden ersten Ausnehmung 72 eines ersten, drehfest auf der Antriebswelle 36 sitzenden Rings 74 in Eingriff bringbar ist.

Desgleichen ist auf der der Stirnseite 68 gegenüberliegenden und somit dem zweiten Wellenlager 46 zugewandten Stirnseite 76 der Zwischenwelle 56 ein zweiter keilförmiger Nocken 78 vorgesehen, welcher in der zweiten Schaltstellung mit einer zweiten keilförmigen Ausnehmung 80 eines zweiten Rings 82 in Eingriff bringbar ist, wobei der zweite Ring 82 ebenfalls drehfest auf der Antriebswelle 36 sitzt.

Die drehfeste Verbindung über die Nocken 70 bzw. 78 sowie die Ausnehmungen 72 bzw. 80 erfolgt in beiden Schaltstellungen aufgrund der keilförmigen Ausbildung derselben spielfrei.

Zum Verschieben der Zwischenwelle 56 auf der Antriebswelle 36 ist, wie in Fig. 3 dargestellt, die Antriebswelle 36 mit einer einen Kolbenraum bildenden Ausnehmung 84 versehen, in welche ein Ringflansch 86 der Zwischenwelle 56 eintaucht und mit einer Rundfläche 88 dichtend auf einem Nutboden 90 der Ausnehmung 84 aufliegt, so daß sich beiderseits des Ringflansches 86 in der Ringnut Druckräume 92 bzw. 94 ausbilden, in welche jeweils eine Hydraulikleitung 96 bzw. 98 mündet, die die Antriebswelle 36 durchsetzen, und über einen über das hintere Ende 50 der Antriebswelle 36 überstehenden Drehanschluß 100 zu einer Hydrauliksteuerung 102 geführt sind, welche ein Schaltventil 104 aufweist, mit welchem entweder der Druckraum 92 oder der Druckraum 94 mit unter Druck stehendem Hydraulikmedium beaufschlagbar sind, so daß bei Beaufschlagung des Druckraums 94 die Zwischenwelle 56 in der ersten Schaltstellung steht, während bei Beaufschlagung des Druckraums 92 die Zwischenwelle 56 in der zweiten Schaltstellung steht.

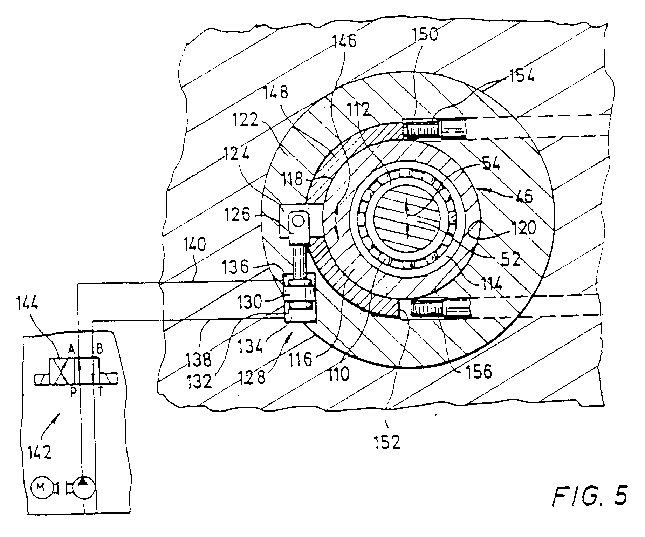

Das zweite Wellenlager 46 umfaßt, wie in Fig. 5 vergrößert dargestellt, ein Drehlager 110 mit einem inneren Lagerring 112, in welchem das vordere Ende 52 der Antriebswelle 36 sitzt und welcher durch Wälzkörper gegenüber einem äußeren Lagerring 114 drehbar ist. Dieser äußere Lagerring 114 ist von einem Exzenterring 116 gehalten und exzentrisch zu einer zylindrischen Außenmantelfläche 118 dieses Exzenterrings 116 angeordnet. An dieser Außenmantelfläche 118 sitzt der Exzenterring in einer kreisrunden Aufnahme 120 einer äußeren drehfest im Haltesteg 48 montierten Lagerbüchse 122. In radialer Richtung des Exzenterrings 116 steht von diesem ein Stellhebel 124 ab, an welchem eine Kolbenstange 126 eines als Ganzes mit 128 bezeichneten Hydraulikzylinders angreift, wobei diese Kolbenstange ungefähr tangential zum Exzenterring 116 verläuft. Der Hydraulikzylinder umfaßt einen Hydraulikkolben 130, welcher in einem Kolbenraum 132 zwei Druckräume 134 und 136 voneinander trennt. Zu jedem dieser Druckräume 134 und 136 führen zwei Hydraulikleitungen 138 und 140, welche zu einer Steuereinheit 142 geführt sind, die ein Schaltventil 144 umfaßt, mit welchem die Druckräume 134 und 136 abwechselnd beaufschlagbar sind. Durch die Bewegung des Kolbens 130 erfährt der Exzenterring 116 eine Drehung in Richtung des Pfeils 146, und aufgrund der exzentrischen Aufnahme des Drehlagers 110 in diesem wird das vordere Ende 52 der Antriebswelle 36 in der Stellrichtung 54 auf die Spindelachse 40 zu oder von dieser weg bewegbar.

Dadurch erfährt die gesamte Antriebswelle 36 eine geringfügige Kippung um eine Kippachse, welche in dem ersten Wellenlager 42 liegt. Durch diese Kippung der Antriebswelle 36 auf die Spindelachse 40 zu oder von dieser weg wird auch gleichzeitig die Zwischenwelle 56 entsprechend gekippt und somit das erste Getriebezahnrad 60 stärker oder weniger stark mit dem zweiten Getriebezahnrad 62 in Eingriff gebracht, so daß die beiden Getriebezahnräder hierdurch entweder spiel frei oder spielbehaftet miteinander kämmen.

Sobald das erste und das zweite Getriebezahnrad 60, 62 spielfrei miteinander kämmen, ist insgesamt ein spielfreier Antrieb der Spindel 16, vorzugsweise zur Steuerung derselben als C-Achse, mittels des Antriebsmotors 28 möglich. Der Antrieb erfolgt sehr langsam, so daß der Verschleiß des ersten und zweiten Getriebezahnrads 60, 62 gering ist. Diese Stellung der Zwischenwelle 56 wird dabei als erste Stellung bezeichnet. Soll dagegen ein Antrieb der Spindel 16 ohne gesteuerte C-Achse erfolgen, so wird das vordere Ende 52 von der Spindelachse 40 weg in der Stellrichtung 54 bewegt und somit die Antriebswelle 36 als Ganzes von der Spindelachse 40 weggekippt, so daß das erste und das zweite Getriebezahnrad 60, 62 lediglich spielbehaftet ineinandergreifen und somit höhere Drehzahlen bei geringem Verschleiß möglich sind. Diese Stellung wird als zweite Stellung der Zwischenwelle 56 bezeichnet.

Um die ersten und zweiten Stellungen genau definieren zu können, ist zusätzlich am Exzenterring 116 noch ein Ringkamm 148 vorgesehen, welcher auf der Außenmantelfläche 118 des Exzenterringes sitzt und die Form eines halben Kreisringes mit zwei auf gegenüberliegenden Seiten liegenden und radial zur Drehachse des Exzenterrings 116 verlaufenden Endflächen 150 und 152 aufweist. Bei einer Drehung des Exzenterrings 116 in Richtung des Pfeils 146 ist dabei entweder die Endfläche 150 oder die Endfläche 152 jeweils gegen eine Stellschraube 154 bzw. 156 als Anschlag beweg- bar, wobei in der ersten Stellung die Endfläche 152 gegen die Stellschraube 156 anliegt, während in der zweiten Stellung die Endfläche 150 gegen die Stellschraube 154 anliegt.

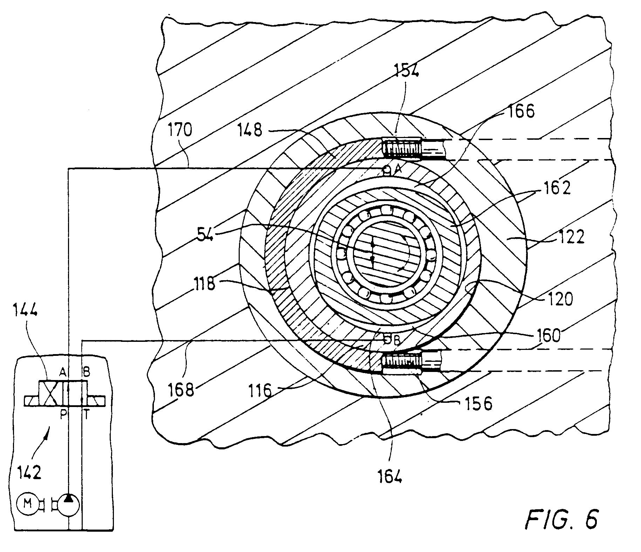

Bei einer Variante des ersten Ausführungsbeispiels, dargestellt in Fig. 6, ist die Lagerhülse 122 ebenfalls mit der Aufnahme 120 versehen, in welcher der Exzenterring 116 mit seiner Außenmantelfläche 118 liegt. Darüber hinaus ist in gleicher Weise ein Ringkamm 148 mit zwei Endflächen 150 und 152 vorgesehen. Im Gegensatz zum ersten Ausführungsbeispiel ist bei dieser Variante der Exzenterring 116 nicht mehr hydraulisch in Richtung des Pfeils 146 drehbar, sondern durch die beiden Stellschrauben 154 und 156 in einer definierten Position gehalten und durch Verdrehen der Stellschrauben 154, 156 in einer bestimmten Position justierbar.

Zum Bewegen des vorderen Endes 52 in Stellrichtung 54 ist der Exzenterring 116 mit einem kreisrunden Kolbenraum 160 versehen, in welchem ein Kolben 162 in der Form eines mit vier Abflachungen versehenen Kreisrings bewegbar angeordnet ist, wobei der Kolben 162 in der Stellrichtung 54 im Kolbenraum 160 beweglich ist und dabei den Kolbenraum 160 in einen ersten Druckraum 164 und einen zweiten Druckraum 166 unterteilt.

In den ersten Druckraum 164 mündet eine erste Hydraulikleitung 168 und in den zweiten Druckraum 166 eine zweite Hydraulikleitung 170, welche beide zu der Steuereinheit 142 geführt sind, die ihrerseits mittels des Schaltventils 144 entweder den einen oder den anderen Druckraum 164 bzw. 166 mit unter Druck stehendem Hydraulikmedium beaufschlagt, so daß der Kolben in der Stellrichtung 54 zwischen einer der ersten und einer der zweiten Stellung in der Nähe der Zwischenwelle 56 entsprechenden Kolbenstellung hin und her bewegbar ist.

Im übrigen ist die erste Variante der Fig. 6 genauso aufgebaut, wie im Zusammenhang mit dem ersten Ausführungsbeispiel beschrieben, so daß für die gleichen Teile die gleichen Bezugszeichen Verwendung finden und auch auf Ausführungen zum ersten Ausführungsbeispiel hinsichtlich der übrigen Teile verwiesen werden kann.

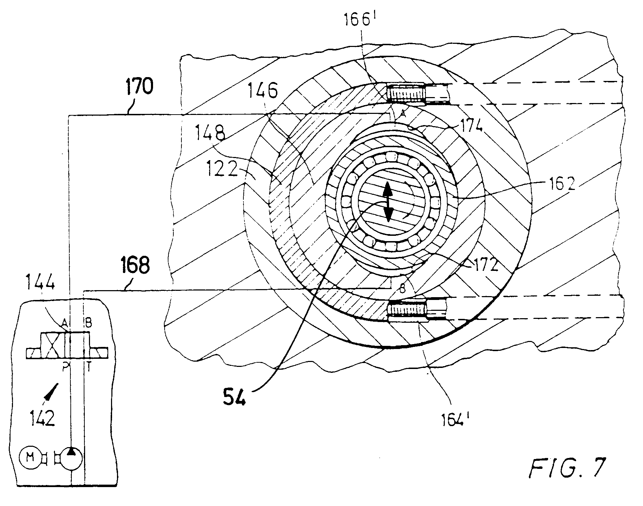

Eine zweite Variante des ersten Ausführungsbeispiels, dargestellt in Fig. 7, stellt eine Abwandlung der ersten Variante, dargestellt in Fig. 6, dar. Im Gegensatz zur ersten Variante ist der Kolben 162 ebenfalls kreisrund ausgebildet, zusätzlich ist jedoch der Kolbenraum 160 in Abweichung von der Kreisform mit diesem eine teilweise ovale Form verleihenden Drucktaschen 172 bzw. 174 versehen, welche zur Bildung des ersten Druckraums 164' und des zweiten Druckraums 166' beitragen. In diese Drucktaschen 172 und 174 münden dann die Hydraulikleitungen 168 und 170, so daß die zweite Variante in gleicher Weise funktioniert wie die erste Variante und daher in vollem Umfang diesbezüglich auf die Ausführungen zur ersten Variante Bezug genommen werden kann.

Im übrigen ist die zweite Variante in gleicher Weise wie die erste Variante hinsichtlich der übrigen Teile identisch ausgebildet, so daß bezüglich dieser Teile auf die Zeichnungen und die Beschreibung zum ersten Ausführungsbeispiel verwiesen werden kann.

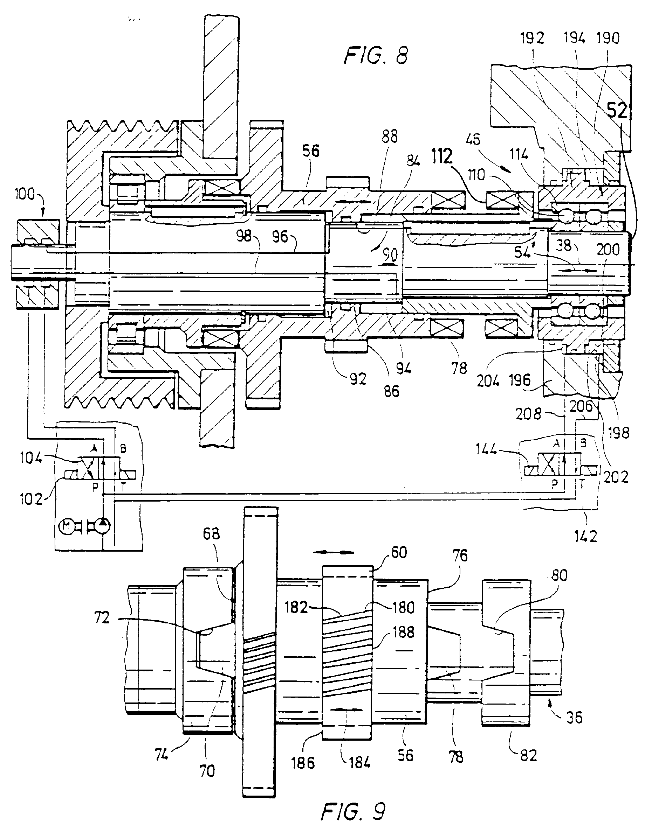

Bei einem zweiten Ausführungsbeispiel, dargestellt in den Figuren 8 und 9, sind insoweit, als die gleichen Teile Verwendung finden, die gleichen Bezugszeichen verwendet, so daß bezüglich der Beschreibung dieser Teile auf die Ausführungen und die zeichnerischen Darstellungen zum ersten Ausführungsbeispiel verwiesen werden kann.

Im Gegensatz zum ersten Ausführungsbeispiel ist das zweite Wellenlager 46 so ausgebildet, daß die Stellrichtung 54' parallel zu der Achse 38 der Antriebswelle 36 verläuft.

Um dabei in gleicher Weise wie beim ersten Ausführungsbeispiel ein spielfreies Kämmen des ersten Getriebezahnrades 60 mit dem zweiten Getriebezahnrad 62 in der ersten Stellung der Zwischenwelle 56 und ein spielbehaftetes Kämmen in der zweiten Stellung der Zwischenwelle 56 zu erreichen, sind einzelne Zähne 180 des ersten Getriebezahnrads 60 so ausgebildet, daß deren Zahnflanken 182 in Querrichtung 184, d.h. von einer ersten Stirnseite 186 zu einer zweiten, dem zweiten Wellenlager 46 zugewandten Stirnseite 188 keilförmig verlaufen und in Richtung von der ersten Stirnseite 186 zur zweiten Stirnseite 188 ihren Abstand erweitern. Greift somit das zweite Getriebezahnrad 62 mit seinen Zähnen in einem der ersten Stirnseite 186 zugewandten Bereich der Zahnflanken 182, so kämmen das erste Getriebezahnrad 60 und das zweite Getriebezahnrad 62 spielbehaftet, wird jedoch das erste Getriebezahnrad in Richtung des ersten Wellenlagers 42 verschoben, so greift das zweite Getriebezahnrad 62 mit seinen Zähnen in einem der zweiten Stirnfläche 188 zuge- wandten Bereich der Zahnflanken 182, so daß nunmehr das erste Getriebezahnrad 60 und das zweite Getriebezahnrad 62 spielfrei kämmen. Dieses spielfreie Kämmen des ersten Getriebezahnrads 60 mit dem zweiten Getriebezahnrad 62 erfolgt in der ersten Stellung der Zwischenwelle, während das spielbehaftete Kämmen in der zweiten Stellung der Zwischenwelle 56 erfolgt.

Zum Überführen der Zwischenwelle 56 von der ersten in die zweite Stellung und umgekehrt, ist das zweite Wellenlager 46 so ausgebildet, daß das vordere Ende 52 der Antriebswelle 36 in Richtung von deren Achse 38 verschieblich ist.

Das zweite Wellenlager 46 umfaßt dabei das Drehlager 110 mit dem inneren Lagerring 112, in welchem das vordere Ende 52 sitzt, und dem äußeren Lagerring 114, welcher in einer entsprechenden Ausnehmung einer Schiebehülse 190 aufgenommen ist.

Diese Schiebehülse 190 weist einen radial nach außen stehenden Ringflansch 192 auf, welcher in eine Ringnut 194 eines als Ganzes mit 196 bezeichneten Lagerblocks eingreift und dichtend an einem Nutboden 198 anliegt.

Dieser Ringflansch 192 unterteilt einen von der Ringnut 194 gebildeten Kolbenraum 200 in einen vorderen Druckraum 202 und einen hinteren Druckraum 204, von denen jeder mit einer Hydraulikleitung 206 bzw. 208 verbunden ist, die zu der Steuereinheit 142 führt, so daß wiederum mittels des Schaltventils 144 entweder der hintere Druckraum 204 oder der vordere Druckraum 202 mit unter Druck stehendem Hydraulikmedium beaufschlagbar ist.

Folgt eine Beaufschlagung des vorderen Druckraumes 202, so wird der Ringflansch 192 in Richtung des ersten Wellenlagers 42 verschoben und verschiebt somit das Ende 52 der Antriebswelle 36 und somit auch die gesamte Antriebswelle 36 in Richtung der Achse 38 und somit auch in Stellrichtung 54', so daß die in der ersten Schaltstellung fixierte Zwischenwelle 56 mit dem ersten Getriebezahnrad 60 in der ersten Stellung steht.

Wird dagegen der hintere Druckraum 204 mit unter Druck stehendem Hydraulikmedium beaufschlagt, so wird die Antriebswelle 36 von dem ersten Wellenlager 42 weg in Richtung des zweiten Wellenlagers 46 verschoben, somit auch die Zwischenwelle 56, und damit steht diese mit dem ersten Getriebezahnrad 60 in der zweiten Stellung, in welcher das erste Getriebezahnrad 60 und das zweite Getriebezahnrad 62 spielbehaftet kämmen.

## Patentansprüche

1. Spindelantrieb für Werkzeugmaschinen, umfassend ein Gehäuse (10), eine in dem Gehäuse (10) gelagerte Spindel (16), einen an dem Gehäuse (10) angeordneten Antriebsmotor (28) und ein in dem Gehäuse (10) angeordnetes Getriebe mit einer vom Antriebsmotor (28) getriebenen und über zwei im Abstand voneinander angeordneten Wellenlagern (42,46) im Gehäuse (10) gelagerten Zwischenwelle (56) sowie mit einem auf der Zwischenwelle (56) sitzenden ersten Getriebezahnrad (60) welches zum Antrieb der Spindel (16) als C-Achse in einer ersten Stellung mit einem die Spindel (16) antreibenden zweiten Getriebezahnrad (62) kämmend und spielfrei in Eingriff ist,
**dadurch gekennzeichnet**,
daß das erste Wellenlager (42) die Zwischenwelle (56) in Richtung quer zu deren Achse (38) unbeweglich am Gehäuse (10) fixiert und daß die Zwischenwelle (56) durch das zweite Wellenlager (46) relativ zu dem zweiten Getriebezahnrad (62) in einer Stellrichtung (54, 54') zwischen der ersten und einer zweiten Stellung hin und her bewegbar ist, wobei in der zweiten Stellung die Getriebezahnräder (60, 62) spielbehaftet miteinander kämmen.

2. Spindelantrieb nach Anspruch 1, dadurch gekennzeichnet, daß das zweite Wellenlager (46) ein die Zwischenwelle (56) aufnehmendes Drehlager (110) und ein das Drehlager (110) in Stellrichtung (54, 54') bewegendes Stellglied (116; 160, 162; 192, 194) umfaßt.

3. Spindelantrieb nach Anspruch 2, dadurch gekennzeichnet, daß das Stellglied (116; 160, 162; 192, 194) das Drehlager (110) umgreift.

4. Spindelantrieb nach Anspruch 2 oder 3, dadurch gekennzeichnet, daß das Stellglied ein Halteelement (116, 160, 162, 190) für das Drehlager (110) aufweist, welches in der Stellrichtung (54, 54') bewegbar ist.

5. Spindelantrieb nach einem der Ansprüche 2 bis 4, dadurch gekennzeichnet, daß das Stellglied ein in einem Lagerteil (122) drehbares Exzenterelement (116) umfaßt.

6. Spindelantrieb nach Anspruch 5, dadurch gekennzeichnet, daß das Exzenterelement (116) durch einen Hydraulikzylinder (128) verdrehbar ist.

7. Spindelantrieb nach einem der Ansprüche 2 bis 6, dadurch gekennzeichnet, daß das Stellglied einen Kolbenraum (160, 194) und einen in diesem angeordneten Kolben (162, 192) umfaßt.

8. Spindelantrieb nach Anspruch 7, dadurch gekennzeichnet, daß das Halteelement (162, 190) den druckbeaufschlagbaren Kolben (162, 192) bildet.

9. Spindelantrieb nach einem der voranstehenden Ansprüche, dadurch gekennzeichnet, daß die Stellrichtung (54) quer zur Achse (38) der Zwischenwelle (56) verläuft.

10. Spindelantrieb nach Anspruch 9, dadurch gekennzeichnet, daß die Stellrichtung (54) im wesentlichen radial zur Drehachse (40) des zweiten Getriebezahnrades (62) verläuft.

11. Spindelantrieb nach einem der Ansprüche 1 bis 8, dadurch gekennzeichnet, daß die Stellrichtung (54') in Richtung der Achse (38) der Zwischenwelle (56) verläuft.

12. Spindelantrieb nach Anspruch 11, dadurch gekennzeichnet, daß eines der Getriebezahnräder (60, 62) in ihrer Querrichtung (184) keilförmig ausgebildete Zähne (180) aufweist.

13. Spindelantrieb nach einem der voranstehenden Ansprüche, dadurch gekennzeichnet, daß die Zwischenwelle (56) eine Hohlwelle ist.

14. Spindelantrieb nach Anspruch 13, dadurch gekennzeichnet, daß die Zwischenwelle (56) auf einer Antriebswelle (36) sitzt.

15. Spindelantrieb nach Anspruch 14, dadurch gekennzeichnet, daß die Zwischenwelle (56) in Richtung ihrer Achse (38) auf der Antriebswelle (36) zwischen einer ersten und zweiten Schaltstellung verschiebbar ist.

16. Spindelantrieb nach Anspruch 14 oder 15, dadurch gekennzeichnet, daß die Zwischenwelle (56) in Richtung ihrer Achse (38) unverschieblich auf der Antriebswelle (36) fixierbar ist.

17. Spindelantrieb nach Anspruch 15 oder 16, dadurch gekennzeichnet, daß die Zwischenwelle (56) in den Schaltstellungen durch Keilverzahnungen (70, 72; 78, 80) mit der Antriebswelle (36) verbindbar ist.

18. Spindelantrieb nach Anspruch 17, dadurch gekennzeichnet, daß die Keilverzahnungen (70, 72; 78, 80) spielfrei in Eingriff bringbar sind.

19. Spindelantrieb nach Anspruch 17 oder 18, dadurch gekennzeichnet, daß die Zwischenwelle (56) quer an einander gegenüberliegenden Stirnseiten (68, 76) mit Keilverzahnungen (70, 78) versehen ist, welche mit entsprechenden und diesen zugewandten Keilverzahnungen (72, 80) der Antriebswelle (36) in der ersten bzw. in der zweiten Schaltstellung in Eingriff bringbar sind.

20. Spindelantrieb nach einem der voranstehenden Ansprüche, dadurch gekennzeichnet, daß die Zwischenwelle (56) ein drittes Getriebezahnrad (64) trägt, welches mit einem vierten, die Spindel (16) antreibenden Getriebezahnrad (66) alternativ zum ersten und zweiten Getriebezahnrad (60, 62) in Eingriff bringbar ist.

21. Spindelantrieb nach einem der Ansprüche 14 bis 20, dadurch gekennzeichnet, daß die Antriebswelle (36) mit dem ersten und dem zweiten Wellenlager (42, 46) im Gehäuse (10) gelagert ist.

## Claims

1. Spindle drive for machine tools, comprising a housing (10), a spindle (16) mounted in the housing (10), a drive motor (28) arranged on the housing (10) and a gear arranged in the housing (10) and comprising an intermediate shaft (56) driven by the drive motor (28) and mounted in the housing (10) via two shaft bearings (42, 46) arranged in spaced relation to one another, said gear also comprising a first gear wheel (60) seated on the intermediate shaft (56), wherein for driving the spindle (16) as C-axis said first gear wheel is in meshing and clearance-free engagement in a first position with a second gear wheel (62) driving the spindle (16), characterized in that the first shaft bearing (42) fixes the intermediate shaft (56) immovably in position on the housing (10) in a direction transverse to its axis (38) and that the intermediate shaft (56) is movable back and forth by the second shaft bearing (46) relative to the second gear wheel (652) in an adjusting direction (54, 54') between the first and a second position, the gear wheels (60, 62) meshing with one another in the second position with clearance.

2. Spindle drive as defined in claim 1, characterized in that the second shaft bearing (46) comprises a pivot bearing (110) receiving the intermediate shaft (56) and an adjusting member (116; 160, 162; 192, 194) moving the pivot bearing (11) in adjusting direction (54, 54').

3. Spindle drive as defined in claim 2, characterized in that the adjusting member (116; 160, 162; 192, 194) engages around the pivot bearing (110).

4. Spindle drive as defined in claim 2 or 3, characterized in that the adjusting member comprises a support member (116, 160, 162, 190) for the pivot bearing (110), said support member being movable in the adjusting direction (54, 54').

5. Spindle drive as defined in any of claims 2 to 4, characterized in that the adjusting member comprises an eccentric member (116) rotatable in a bearing member (122).

6. Spindle drive as defined in claim 5, characterized in that the eccentric member (116) is rotatable by a hydraulic cylinder (128).

7. Spindle drive as defined in any of claims 2 to 6, characterized in that the adjusting member comprises a piston chamber (160, 194) and a piston (162, 192) arranged therein.

8. Spindle drive as defined in claim 7, characterized in that the support member (162, 190) forms the piston (162, 192) acted upon by pressure.

9. Spindle drive as defined in any of the preceding claims, characterized in that the adjusting direction (54) extends transversely to the axis (38) of the intermediate shaft (56).

10. Spindle drive as defined in claim 9, characterized in that the adjusting direction (54) extends essentially radially to the axis of rotation (40) of the second gear wheel (62).

11. Spindle drive as defined in any of claims 1 to 8, characterized in that the adjusting direction (54') extends in the direction of the axis (38) of the intermediate shaft (56).

12. Spindle drive as defined in claim 11, characterized in that one of the gear wheels (60, 62) comprises teeth (180) having a wedge-shaped design in their transverse direction (184).

13. Spindle drive as defined in any of the preceding claims, characterized in that the intermediate shaft (56) is a hollow shaft.

14. Spindle drive as defined in claim 13, characterized in that the intermediate shaft (56) is seated on a drive shaft (36).

15. Spindle drive as defined in claim 14, characterized in that the intermediate shaft (56) is displaceable on the drive shaft (36) in the direction of its axis (38) between a first and a second switching position.

16. Spindle drive as defined in claim 14 or 15, characterized in that the intermediate shaft (56) is adapted to be fixed on the drive shaft (36) so as to be immovable in the direction of its axis (38).

17. Spindle drive as defined in claim 15 or 16, characterized in that the intermediate shaft (56) is adapted to be connected to the drive shaft (36) in the switching positions by way of wedge-shaped teeth (70, 72; 78, 80).

18. Spindle drive as defined in claim 17, characterized in that the wedge-shaped teeth (70, 72; 78, 80) are adapted to be brought into engagement without clearance.

19. Spindle drive as defined in claim 17 or 18, characterized in that the intermediate shaft (56) is provided with wedge-shaped teeth (70, 78) transversely on opposite end faces (68, 76), said teeth being adapted to be brought into engagement with corresponding, facing wedge-shaped teeth (72, 80) of the drive shaft (36) in the first and second switching positions, respectively.

20. Spindle drive as defined in any of the preceding claims, characterized in that the intermediate shaft (56) bears a third gear wheel (64) adapted to be brought into engagement with a fourth gear wheel (66) driving the spindle (16) alternatively to the first and second gear wheels (60, 62).

21. Spindle drive as defined in any of claims 14 to 20, characterized in that the drive shaft (36) is mounted in the housing (10) by the first and the second shaft bearings (42, 46).

## Revendications

1. Motorisation de broche de machines-outil, comprenant une enveloppe (10), une broche (16) montée dans l'enveloppe (10), un moteur de commande (28) disposé dans l'enveloppe (10) et un train de transmission disposé dans l'enveloppe (10) et comprenant un arbre intermédiaire (56) entraîné par le moteur de commande (28) et monté dans l'enveloppe (10) au moyen de deux paliers (42, 46) disposés à distance l'un de l'autre, ainsi qu'un premier pignon de transmission (60) qui est calé sur l'arbre intermédiaire (56) et qui, pour entraîner la broche, constitue un axe C, engrène et est en prise sans jeu à une première position avec un second pignon de transmission (62) qui entraîne la broche (16), caractérisée en ce que le premier palier (42) immobilise l'arbre intermédiaire (56) en direction perpendiculaire à son axe (38) de manière qu'il soit immobile dans l'enveloppe (10) et en ce que l'arbre intermédiaire (56) est déplaçable alternativement au moyen du second palier (46) entre la première et une seconde position par rapport au second pignon de transmission (62) dans une direction de réglage (54, 54'), les pignons de transmission (60,62) engrenant avec jeu à la seconde position.

2. Motorisation de broche selon la revendication 1, caractérisée en ce que le second palier (46) comprend un roulement (110) logeant l'arbre intermédiaire (56) et un organe réglant (116 ; 160, 162 ; 192, 194) déplaçant le roulement (110) dans la direction de réglage (54, 54').

3. Motorisation de broche selon la revendication 2, caractérisée en ce que l'organe réglant (116 ; 160, 162 ; 192, 194) entoure le roulement (110).

4. Motorisation de broche selon la revendication 2 ou 3, caractérisée en ce que l'organe réglant comprend un élément d'arrêt (116, 160, 162, 190) du roulement (110) qui est déplaçable dans la direction de réglage (54, 54').

5. Motorisation de broche selon l'une des revendications 2 à 4, caractérisée en ce que l'organe réglant comprend un élément excentrique (116) rotatif dans un support (122).

6. Motorisation de broche selon la revendication 5, caractérisée en ce que l'élément exentrique (116) peut être entraîné en rotation par un cylindre hydraulique (128).

7. Motorisation de broche selon l'une des revendications 2 à 6, caractérisée en ce que l'organe réglant comprend une enceinte (160, 194) et un piston (162,192) disposé dans cette dernière.

8. Motorisation de broche selon la revendication 7, caractérisée en ce que l'élément d'arrêt (162, 190) forme le piston (162, 192) qui peut être soumis à une pression.

9. Motorisation de broche selon l'une des revendications précédentes, caractérisée en ce que la direction de réglage (54) est perpendiculaire à l'axe (38) de l'arbre intermédiaire (56).

10. Motorisation de broche selon la revendication 9, caractérisée en ce que la direction de réglage (54) est sensiblement radiale sur l'axe de rotation (40) du second pignon de transmission (62).

11. Motorisation de broche selon l'une des revendications 1 à 8, caractérisée en ce que la direction de réglage (54') est orientée dans la direction de l'axe (38) de l'arbre intermédiaire (56).

12. Motorisation de broche selon la revendication 11, caractérisée en ce que l'un des pignons de transmission (60, 62) comporte des dents (180) qui sont cunéiformes en direction transversale (184).

13. Motorisation de broche selon l'une des revendications précédentes, caractérisée en ce que l'arbre ntermédiaire (56) est un arbre creux.

14. Motorisation de broche selon la revendication 13, caractérisée en ce que l'arbre intermédiaire (56) est monté sur une arbre de commande (36).

15. Motorisation de broche selon la revendication 14, caractérisée en ce que l'arbre intermédiaire (56) est déplaçable dans la direction de son axe (38) sur l'arbre de commande (36) entre une première et une seconde position d'enclenchement.

16. Motorisation de broche selon la revendication 14 ou 15, caractérisée en ce que l'arbre intermédiaire (56) est immobilisable dans la direction de son axe (38) de façon qu'il soit indéplaçable sur l'arbre de commande (36).

17. Motorisation de broche selon la revendication 15 ou 16, caractérisée en ce que l'arbre intermédiaire (56) peut être raccordé à l'arbre de commande (36) aux positions d'enclenchement par des dentures cunéiformes (70, 72 ; 78, 80).

18. Motorisation de broche selon la revendication 17, caractérisée en ce que les dentures cunéiformes (70, 72 ; 78, 80) peuvent être mises en prise sans jeu.

19. Motorisation de broche selon la revendication 17 ou 18, caractérisée en ce que l'arbre intermédiaire (56) est équipé transversalement sur les côtés extrêmes opposés (68, 76) de dentures cunéiformes (70, 78) qui peuvent être mises en prise à la première position ainsi qu'à la seconde position d'enclenchement avec des dentures cunéiformes correspondantes (72, 80) de l'arbre de commande (36) qui font face aux précédentes.

20. Motorisation de broche selon l'une des revendications précédentes, caractérisée en ce que l'arbre intermédiaire (56) supporte un troisième pignon de transmission (64) qui peut être mis en prise avec un quatrième pignon de transmission (66), qui entraîne la broche (16), en alternance avec les premier et second pignons de transmission (60, 62).

21. Motorisation de broche selon l'une des revendications 14 à 20, caractérisée en ce que l'arbre de commande (36) est monté dans l'enveloppe (10) avec les premier et second paliers (42, 46).
